# EUROPEAN PATENT SPECIFICATION

(11) **EP 2 940 399 B1**
(45) Date of publication and mention of the grant of the patent: **13.06.2018**
(21) Application number: 13868433.7
(22) Date of filing: 09.12.2013
(51) Int. Cl.: F24J 1/00, H01M 8/04, F24H 1/00, F24D 15/00, F24D 17/00

(54) **BOILER SYSTEM USING FUEL CELL**
KESSELSYSTEM MIT BRENNSTOFFZELLE
SYSTÈME DE CHAUDIÈRE UTILISANT UNE PILE À COMBUSTIBLE

(30) Priority: 28.12.2012 KR 20120157457
(43) Date of publication of application: 04.11.2015
(73) Proprietor: Kyungdong Navien Co., Ltd., Gyeonggi-do 450-818 (KR); Korea Gas Safety Corporation, Chungcheongbuk-do 369-811 (KR)
(72) Inventor: LEE, Jung Un, Seoul 150-889 (KR); LEE, Deokgwon, Seoul 150-830 (KR); LEE, Daenyeong, Seoul 153-803 (KR); KIM, Inchan, Seoul 135-873 (KR); KIM, Eun Jung, Anyang-si Gyeonggi-do 431-722 (KR); SON, Seungkil, Bucheon-si Gyeonggi-do 420-030 (KR); SHIN, Seockjae, Seoul 110-030 (KR); KIM, Jongmin, Yongin-si Gyeonggi-do 449-821 (KR); KIM, Jinhyeong, Seoul 153-801 (KR)
(74) Representative: Delorme, Nicolas
(86) International application number: PCT/KR2013/011338
(87) International publication number: WO 2014/104610

(56) References cited:
- EP-A1- 0 818 840
- EP-A2- 1 772 682
- WO-A1-2012/081206
- JP-A- H09 296 929
- JP-A- 2001 132 940
- JP-A- 2012 199 068
- JP-A- 2012 199 068
- KR-A- 20110 077 655
- KR-B1- 100 418 459
- KR-B1- 100 820 144
- KR-B1- 101 080 311
- US-A1- 2005 161 521

## Description

### [Technical Field]

The present invention relates to a boiler system using a fuel cell. More particularly, the present invention relates to a fuel cell based boiler system in which, in a structure of the fuel cell, an exhaust opening which discharges exhaust gas generated during operation of a boiler and an air suction opening which supplies oxygen required for operation of the boiler are configured for efficiency.

### [Background Art]

In countries having four distinct seasons or in cold countries, a boiler system, which uses kerosene, gas, coal or the like as an energy source for heating a room of a home or a building, is used.

A general boiler system has a boiler installed indoors or outdoors for receiving and burning fuel. Water is heated by heat of combustion in the boiler, and the water heated thus is circulated through a heat dissipation circulating line connected to the boiler buried in a floor of the room. While the water repeats the circulation in which the water is heated at the boiler, circulates through the heat dissipation circulating line, and heated at the boiler again, the heat is transmitted to, and heats, the room floor.

And, a warm water line is connected between the boiler and city water line which supplies city water and is connected to a washroom, a laundry room, a kitchen, and so on.

However, when the boiler system heats the water with the heat of combustion of the gas or kerosene for heating the room and using the warm water, it consumes a large amount of gas or kerosene, which not only causes emission of pollutants that are severely harmful to human bodies, but also increases an economic burden to households and the fossil fuel is gradually being exhausted.

Recently, in order to solve such a problem, a scheme has been under research in which a fuel cell is installed in a house or a building for producing and using electricity and heat a user requires personally to reduce emission of the pollutants and rates of electricity and room heating while generating the electricity and the heat at the same time.

However, since the electricity produced from the fuel cell is supplied to outside and the heat incidentally generated is recovered in a mode of the warm water and is used for the room heating and warm water supply, the boiler is used together with the fuel cell.

According to this, air suction and exhaust openings for the fuel cell and air suction and exhaust openings for the boiler are respectively required, resulting in inconvenience in view of space and installation.

Moreover, as a number of the air suction and exhaust openings increases, a risk of leakage of the exhaust gas to outside increases.

US 2005/161521, WO2012/081206A1, JP 2012-199068 disclose a boiler system using a fuel cell. EP1 772 682 discloses a heating and hot-water supplying system which includes a fuel cell and a boiler. KR 2011 0077655 discloses a fuel cell system having a separable auxiliary burner.

### [Disclosure]

### [Technical Problem]

The present invention has been made in an effort to provide a boiler system using a fuel cell having advantages of resolving inconveniences in view of space, structure, and installation occurring for mounting air suction and exhaust openings for a fuel cell and air suction and exhaust openings for a boiler, and reducing risk of exhaust gas leakage caused by an increased number of the air suction and exhaust openings.

Accordingly, an object of the present invention devised for solving the problems is to provide a boiler system using a fuel cell, which may resolve inconveniences in view of space, structure, and installation occurring for mounting air suction and exhaust openings for a fuel cell and air suction and exhaust openings for a boiler, and may reduce risk of exhaust gas leakage caused by an increased number of the air suction and exhaust openings.

### [Technical Solution]

To achieve the object of the present invention, there is provided a boiler system using a fuel cell according to claim 1.

### [Advantageous Effects]

The boiler system using a fuel cell in accordance with the present invention may resolve inconveniences in view of space, structure, and installation of the boiler system, such as a spatial restriction occurring for mounting the first exhaust line, the first suction line of the boiler, the second exhaust line, and the second suction line of the fuel cell, as an example, problems of making a plurality of holes in inner and outer walls of the boiler room.

Since the suction lines and the exhaust lines of the boiler and the fuel cell may be fabricated as a single suction and exhaust integrated pipe having a multiple pipe member or a partition wall, a complex pipe configuration may be simplified and leakage from the pipes may be reduced.

The damper means or the electronic valve means provided to a crossing point of suction and exhaust lines of the boiler and the fuel cell may prevent a reverse flow in view of structure.

### [Description of Drawings]

FIG. 1 illustrates a schematic view of a boiler system using a fuel cell in accordance with a preferred embodiment of the present invention.
FIGS. 2 to FIG. 4 illustrate a perspective view, another perspective view, and a cross-sectional view of a suction and exhaust integrated pipe in a boiler system using a fuel cell in accordance with a preferred embodiment of the present invention, respectively.
FIGS. 5 to FIG. 13 illustrate schematic views showing variations of a boiler system using a fuel cell in accordance with a preferred embodiment of the present invention, respectively.

### [Best Mode]

In order to achieve the objects of the present invention, a boiler system using a fuel cell is provided, in which a fuel cell and a boiler are installed in a home or a building for heating a fluid with reaction heat from the fuel cell and combustion heat from the boiler to heat a room as the fluid heated thus circulates beneath a floor of the room of the home or the building, and heating city water with the heat from the fuel cell and the combustion heat from the boiler to supply warm water to a washroom or kitchen of the home or the building.

### [Mode for Invention]

A boiler system using a fuel cell in accordance with a preferred embodiment of the present invention will be described with reference to the attached drawings, in detail.

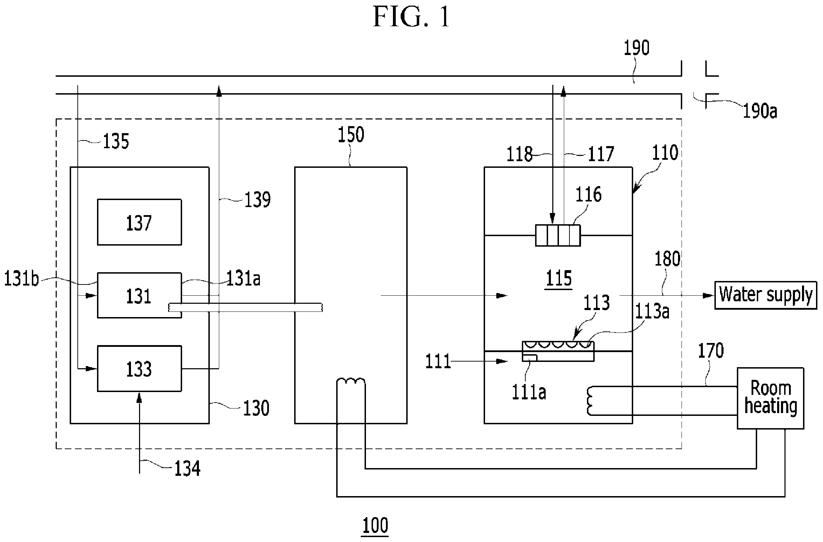

FIG. 1 illustrates a schematic view of a boiler system using a fuel cell in accordance with a preferred embodiment of the present invention.

Referring to FIG. 1, the boiler system 100 using a fuel cell in accordance with a preferred embodiment of the present invention includes a boiler 110 installed in a home, a building, or the like, a fuel cell 130 for generating electricity and reaction heat by electrochemical reaction between fuel and oxygen, a storage tank 150 for recovering and storing the reaction heat generated by the fuel cell 130 with a fluid, a room heating line 170 buried beneath a room floor of the home or the building, a warm water line 180 connected to supply warm water to a washroom or a kitchen of the home or the building through the boiler 110 or the storage tank 150 when water is supplied thereto from the outside, and a suction and exhaust integrated pipe 190 for supplying oxygen to cause combustion or the electrochemical reaction at the boiler 110 or the fuel cell 130 and discharging gas produced from the boiler 110 and a combustion or cathodic air electrode of the fuel cell 130.

In general, there may be different kinds of boilers 110 depending on heat sources, modes of mounting, mounting places, suction/exhaust systems, water supply systems, heat dissipation systems, structures of heat exchanger, as so on.

The boiler 110 in the boiler system100 using a fuel cell in accordance with a preferred embodiment of the present invention includes a fuel injection unit 111a for injecting the fuel being supplied thereto from a first fuel supply line 111, a burner 113 for mixing the fuel injected by the fuel injection unit 111a with air, and a combustion chamber 115 for causing combustion of mixed gas of the fuel and the air with an igniter if the mixed gas is injected through a flame hole 113a in the burner 113.

The boiler 110 may have forced flow generating means 116, such as a blower, appropriately designed as an array for forcibly drawing room air or outdoor air through a first suction line 118, and discharging the exhaust gas outside of the room through a first exhaust line 117 by a negative pressure.

It may also be configured such that a heat source of the fluid in the storage tank 150 is supplied to the room heating line 170 directly or through the boiler 110.

Further, the room heating line 170 may be connected to the storage tank 150 for introducing the fluid to the storage tank 150 after passing through the room heating line 170.

The fuel cell 130 has the fuel, such as hydrogen, and the air containing the oxygen continuously supplied thereto for generating electrical energy and heat as a byproduct by an electrochemical reaction between the hydrogen and the oxygen.

The fuel cell 130 may be an MCFC (Molten Carbonate Fuel Cell) or an SOFC (Solid Oxide Fuel Cell) operative at a high temperature of over 600 °C, or a PAFC (Phosphoric Acid Fuel Cell) and a PEMFC (Proton Exchange Membrane Fuel Cells) operative at a comparatively low temperature of below 200 °C.

The fuel cell 130 may include a stack unit 131 having a fuel electrode 131a and an air electrode 131b for generating electric energy and heat which is a byproduct of an electrochemical reaction between reformed gas or hydrogen being supplied to the fuel electrode 131a and oxygen being supplied to the air electrode 131b, a reforming unit 133 for receiving the fuel, reforming the fuel into the hydrogen, and supplying the hydrogen to a fuel electrode 131a side of the stack unit 131, a second fuel supply line 134 for supplying the fuel to the reforming unit 133, a second suction line 135 for supplying air to the reforming unit 133 and the air electrode 131b in the stack unit 131, a power conversion unit 137 for converting the electrical energy generated at the stack unit 131 to commercial power, and a second exhaust line 139 for discharging the gas from the reforming unit 133 and the stack unit 131 to the outside.

The fuel may be LNG, LPG, a hydrocarbon group fuel, or hydrogen.

In the boiler system 100 using a fuel cell in accordance with a preferred embodiment of the present invention, the first exhaust line 117 and the first suction line 118 of the boiler 110, and the second exhaust line 139 and the second suction line 135 of the fuel cell 130, may be made to be in communication with the atmosphere through a suction and exhaust integrated opening 190a via the suction and exhaust integrated pipe 190.

According to this, inconveniences in view of space, structure, and installation of the boiler system 100, such as a spatial restriction occurring for mounting the first exhaust line 117 and the first suction line 118 of the boiler 110, and the second exhaust line 139 and the second suction line 135 of the fuel cell 130, as an example, problems of making a plurality of holes in inner and outer walls of the boiler room may be resolved.

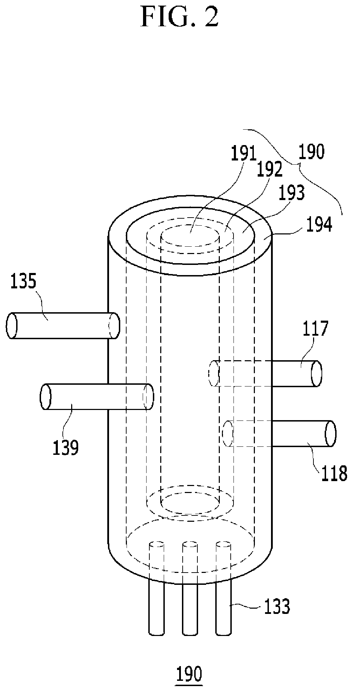

The suction and exhaust integrated pipe 190 in the boiler system 100 using a fuel cell in accordance with a preferred embodiment of the present invention will be described with reference to FIGS. 2A to 2C.

FIGS. 2 to FIG. 4 illustrate a perspective view, another perspective view, and a cross-sectional view of a suction and exhaust integrated pipe 190 in a boiler system 100 using a fuel cell in accordance with a preferred embodiment of the present invention, respectively.

Referring to FIGS. 2 to FIG. 4, the suction and exhaust integrated pipe 190 in the boiler system 100 using a fuel cell in accordance with a preferred embodiment of the present invention may be constructed as a quadruple pipe in which a first pipe member 191, a second pipe member 192, a third pipe member 193, and a fourth pipe member 194 are arranged to be overlapped and centered on a concentric axis respectively connected to the first exhaust line 117 and the first suction line 118 of the boiler 110, and the second exhaust line 139 and the second suction line 135 of the fuel cell 130.

The suction and exhaust integrated pipe 190 in the boiler system 100 using a fuel cell in accordance with a preferred embodiment of the present invention may use the first exhaust line 117 of the boiler 110 and the second exhaust line 139 of the fuel cell 130 as the first pipe member 191 in common, and the first suction line 118 and the second suction line 135 of the fuel cell 130 as the second pipe member 192 in common. In this case, the first pipe member 191 and the second pipe member 192 may be constructed as a double pipe arranged to be overlapped and centered on a concentric axis.

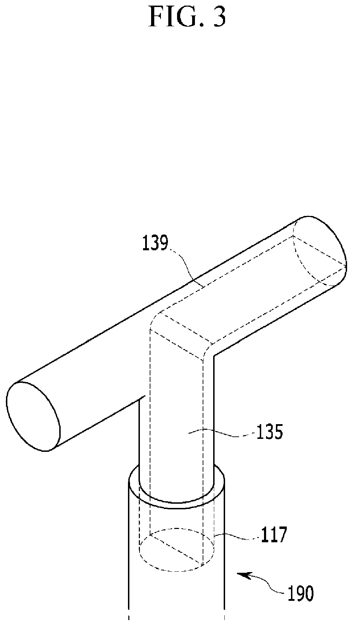

Further, as shown in FIG. 3, the second suction line 135 and the second exhaust line 139 of the fuel cell 130 may be arranged in a mode of branches within the first pipe member 191.

The second suction line 135 and the second exhaust line 139 of the fuel cell 130 may be respectively connected to the first pipe member 191 and the second pipe member 192 which are respectively connected to the first exhaust line 117 and the first suction line 118 of the boiler 110 in a mode of a plurality of branch pipes.

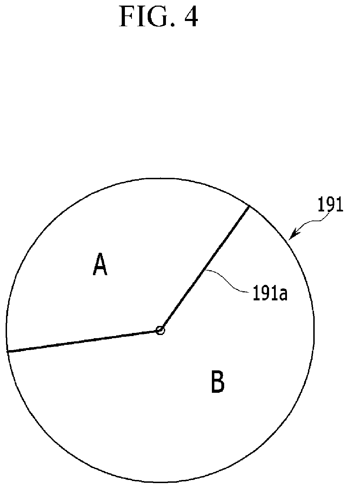

As shown in FIG. 4, in the suction and exhaust integrated pipe 190 in the boiler system 100 using a fuel cell in accordance with a preferred embodiment of the present invention, it not only has at least two multiple pipes or branch pipes, but also has a partition wall 191a formed within the first pipe member 191 to divide a cross-sectional area of the first pipe member 191 into a suction area A of the boiler 110 and the fuel cell 130 and an exhaust area B of the boiler 110 and the fuel cell 130 according to an exhaust rate and a suction rate.

Accordingly, since the suction lines and the exhaust lines of the boiler 110 and the fuel cell 130 may be fabricated as the single suction and exhaust integrated pipe 190, a complex pipe configuration may be simplified and leakage from the pipes may be reduced.

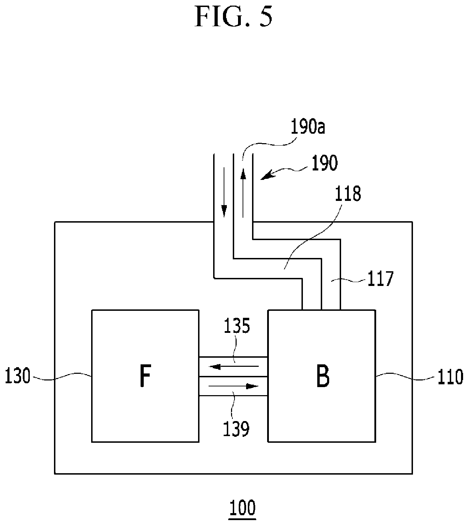

Referring to FIGS. 5 to 13, variations of the boiler system using a fuel cell in accordance with the preferred embodiment of the present invention will be described.

FIGS. 5 to FIG. 13 illustrate schematic views showing variations of a boiler system using a fuel cell in accordance with a preferred embodiment of the present invention, respectively.

As shown in FIG. 5, a suction and exhaust integrated pipe 190 in the boiler system 100 using a fuel cell in accordance with a preferred embodiment of the present invention may have a first pipe member 191 connected to a suction and exhaust integrated opening 190a partitioned with a partition wall 191a for introducing outdoor air introduced thereto to the first suction line 118 of the boiler 110 and the second suction line 135 of the fuel cell 130, and discharging gas being discharged through the first exhaust line 117 and the second exhaust line 139 of the fuel cell 130 through the integrated pipe opening 190a via the first pipe member 191.

That is, the suction openings and the exhaust openings of the boiler 110 and the fuel cell 130 are integrated into one to use the same in common.

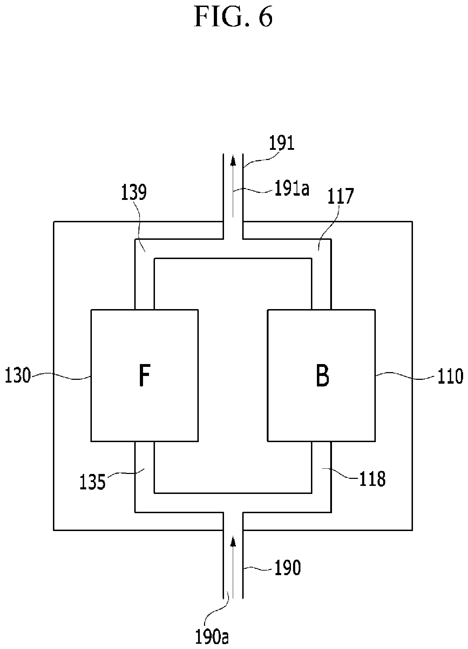

As shown in FIG. 6, a suction integrated pipe 191 in the boiler system 100 using a fuel cell in accordance with a preferred embodiment of the present invention may be configured such that the suction integrated pipe 191 introduces outdoor air introduced thereto through a first pipe member 191 connected to one suction integrated opening 190a to the first suction line 118 of the boiler 110 and the second suction line 135 of the fuel cell 130, and may allow exhaust gas being discharged through the first exhaust line 117 and the second exhaust line 139 of the fuel cell 130 through another first pipe member 191 via another suction and exhaust integrated opening 191a.

That is, suction openings and exhaust openings of the boiler 110 and the fuel cell 130 may be used in common, respectively.

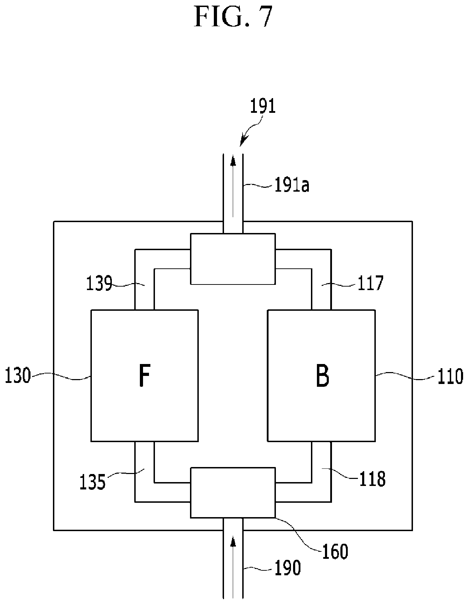

In this case, as shown in FIG. 7, in order to prevent a reverse flow from taking place by controlling a suction flow between the first suction line 118 of the boiler 110 and the second suction line 135 of the fuel cell 130 and an exhaust flow between the first exhaust line 117 of the boiler 110 and the second exhaust line 139 of the fuel cell 130, which use the first pipe member 191 in common, a damper means or electronic control means 160, such as a solenoid valve or the like, may be used at a crossing point of the two lines.

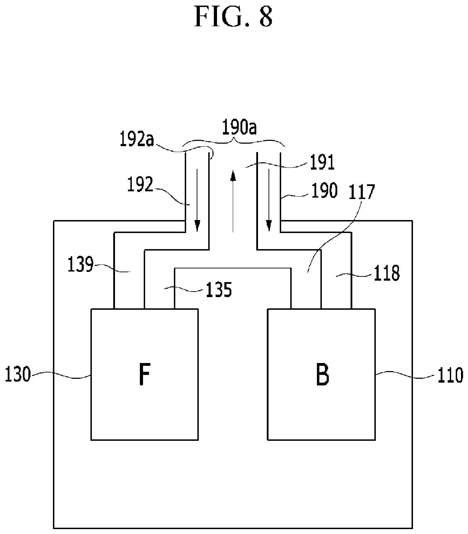

As shown in FIG. 8, the suction and exhaust integrated pipe 190 in the boiler system 100 using a fuel cell in accordance with a preferred embodiment of the present invention may be a double pipe connected to a suction and exhaust integrated opening 190a.

The double pipe has a first pipe member 191 having the first exhaust line 117 of the boiler 110 and the second exhaust line 135 of the fuel cell 130 made to be in communication therewith such that the boiler 110 and the fuel cell 130 use the first pipe member 191 as an exhaust line in common, and a second pipe member 192 around the first pipe member 191 partitioned with a partition wall 192a having the first suction line 118 of the boiler 110 and the second suction line 139 of the fuel cell 130 made to be in communication therewith such that suction gases of the first suction line 118 of the boiler 110 and the second suction line 139 of the fuel cell 130 are prevented from mixing for maintaining respective characteristics of the suction gases.

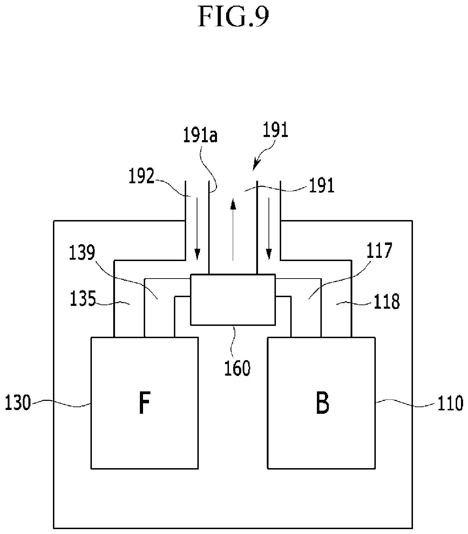

In this case, as shown in FIG. 9, in order to prevent a reverse flow from taking place by controlling an exhaust flow between the first exhaust line 117 of the boiler 110 and the second exhaust line 139 of the fuel cell 130, which use the first pipe member 191 in common, damper means or electronic control means 160, such as a solenoid valve or the like, may be used at a crossing point of the two lines.

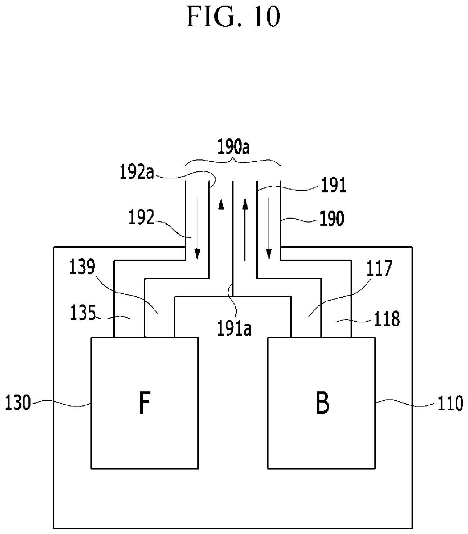

Further, as shown in FIG. 10, the suction and exhaust integrated pipe 190 in the boiler system 100 using a fuel cell in accordance with a preferred embodiment of the present invention may be a double pipe connected to a suction and exhaust integrated opening 190a having partition walls formed at inner and outer pipe members.

Since the double pipe has the first pipe member 191 partitioned with the partition wall 191a with the first exhaust line 117 of the boiler 110 and the second exhaust line 139 of the fuel cell 130 made to be in communication therewith such that the boiler 110 and the fuel cell 130 use the first pipe member 191 as an exhaust line in common by dividing an area of the first pipe member 191, preventing exhaust gases of the first exhaust line 117 of the boiler 110 and the second exhaust line 139 of the fuel cell 130 from mixing, characteristics of the exhaust gases may be maintained.

Also, by partitioning the second pipe member 192 around the first pipe member 191 with the partition wall 192a and making the first suction line 118 of the boiler 110 and the second suction line 135 of the fuel cell 130 to be in communication therewith, preventing the suction gases of the first suction line 118 of the boiler 110 and the second suction line 135 of the fuel cell 130 from mixing, characteristics of the suction gases may be maintained.

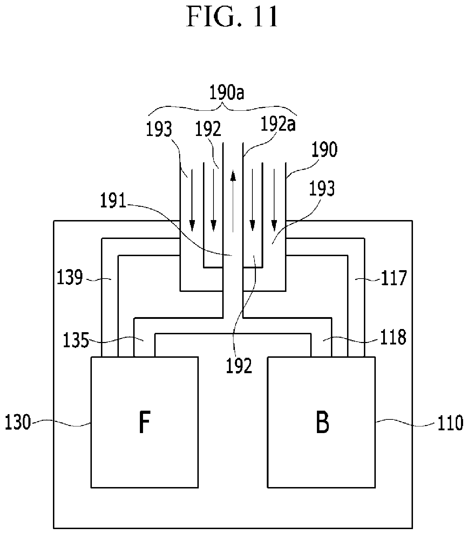

As shown in FIG. 11, the suction and exhaust integrated pipe 190 in the boiler system 100 using a fuel cell in accordance with a preferred embodiment of the present invention may be a triple pipe connected to a suction and exhaust integrated opening 190a.

The triple pipe may have the first pipe member 191 to be in communication with the first exhaust line 118 of the boiler 110 and the second exhaust line 135 of the fuel cell 130 such that the boiler 110 and the fuel cell 130 use the first pipe member 191 as an exhaust line in common, and the second pipe member 192 and the third pipe member 193 which surround the first pipe member 191 in succession to be in communication with the second suction line 139 of the fuel cell 130 and the first suction line 117 of the boiler 110 respectively, preventing suction gases of the first suction line 117 of the boiler 110 and the second suction line 139 of the fuel cell 130 from mixing, thereby enabling to maintain characteristics of the suction gases, respectively.

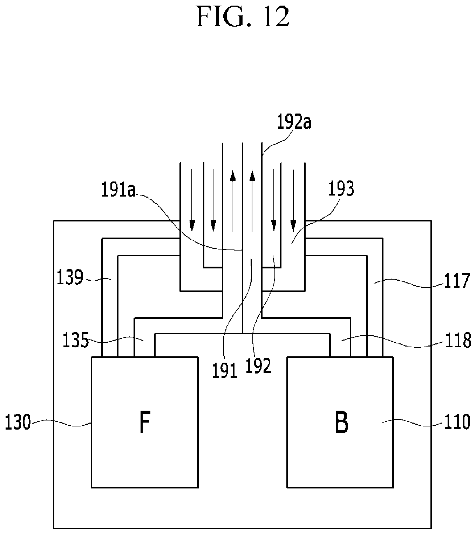

In this case, as shown in FIG. 12, though it has a triple pipe structure, by partitioning the first pipe member 191 with the partition wall 191a into two areas, and making the first exhaust line 118 of the boiler 110 and the second exhaust line 135 of the fuel cell 130 to be in communication therewith such that the boiler 110 and the fuel cell 130 use the first pipe member 191 as an exhaust line in common by dividing an area of the first pipe member 191, preventing the exhaust gases of the first exhaust line 118 of the boiler 110 and the second exhaust line 135 of the fuel cell 130 from mixing, characteristics of the exhaust gases may be maintained, respectively.

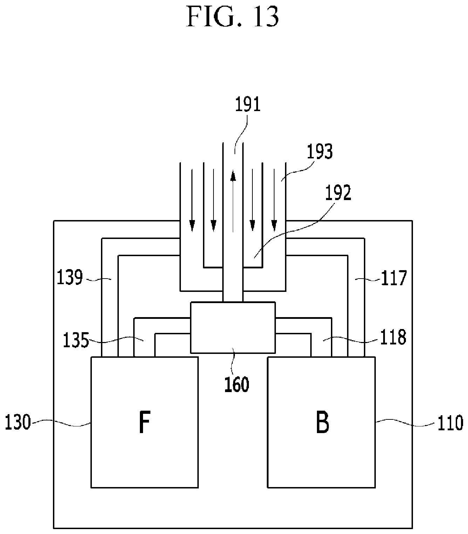

In this case, as shown in FIG. 13, in order to prevent a reverse flow from taking place by controlling an exhaust flow between the first exhaust line 118 of the boiler 110 and the second exhaust line 135 of the fuel cell 130 which use the first pipe member 191 in common, a damper means or electronic control means 160, such as solenoid valve, may be used at a crossing point of the two lines.

**[Industrial Applicability]**

## Claims

1. A boiler system using a fuel cell comprising:
a boiler (110) installed in a home or a building;
a fuel cell for generating electricity and reaction heat by electrochemical reaction between a fuel and oxygen;
a storage tank (150) for recovering and storing the reaction heat generated by the fuel cell (130) with a fluid;
a room heating line (170) buried beneath a room floor of the home or the building;
a warm water line connected to supply warm water to a washroom or a kitchen of the home or the building through the boiler (110) or the storage tank (150) when water is supplied thereto from the outside; and
a suction and exhaust integrated pipe (190) having at least two of at least one first exhaust line (117), at least one first suction line (118) of the boiler (110), at least one second exhaust line (135), and at least one second suction line (135) of the fuel cell (130) connected thereto to be used in common, wherein the suction and exhaust integrated pipe (190) is constructed of a first pipe member (191) used by the first suction line (118) of the boiler (110) and the second suction line (135) of the fuel cell (130) in common, and another first pipe member used by the first exhaust line (117) of the boiler (110) and the second exhaust line (135) of the fuel cell (130) in common, **characterized in that** the boiler system (100) further comprises damper means or electronic valve means (160) used at each of crossing points of the first suction line (118) of the boiler (110) and the second suction line (135) of the fuel cell (130) and the first exhaust line of the boiler (110) and the second exhaust line (135) of the fuel cell (130).

2. The boiler system using a fuel cell of claim 1, wherein the second suction line (135) has a stack unit (131) which generates electrical energy and heat by electrochemical reaction between hydrogen and oxygen and a reforming unit (133) for receiving the fuel and supplying reformed hydrogen to the stack unit (131) connected thereto.

3. The boiler system using a fuel cell of claim 1 or claim 2, wherein the suction and exhaust integrated pipe (190) is a multiple pipe including at least two pipe members arranged centered on a concentric axis.

4. The boiler system using a fuel cell of claim 3, wherein the at least two pipe members include a partition wall (191a) for dividing a cross-sectional area thereof into at least two areas.

5. The boiler system using a fuel cell of claim 1, wherein
the suction and exhaust integrated pipe (190) is a double pipe having a suction and exhaust integrated opening, wherein
the double pipe has a first pipe member made to be in communication with the first exhaust line of the boiler (110) and the second exhaust line (135) of the fuel cell (130) for the first exhaust line of the boiler (110) and the second exhaust line (135) of the fuel cell (130) to use the first pipe member in common, and a second pipe member which surrounds the first pipe member made and divided with a partition wall to be in communication with the first suction line of the boiler (110) and the second suction line of the fuel cell (130) for the first suction line (118) of the boiler (110) and the second suction line (135) of the fuel cell (130) to use the second pipe member (192), respectively.

6. The boiler system using a fuel cell of claim 5, further comprising a damper means or an electronic valve means provided at a crossing point of the first exhaust line of the boiler (110) and the second exhaust line (135) of the fuel cell (130) which use the first pipe member (191) in common.

7. The boiler system using a fuel cell of claim 1, wherein
the suction and exhaust integrated pipe (190) is a double pipe having a suction and exhaust integrated opening with partition walls (191a) formed on inner and outer pipe members, and wherein
the double pipe has the first pipe member (191) divided with a partition wall into a first area and a second area to be in communication with the first exhaust line (117) of the boiler (110) and the second exhaust line (135) of the fuel cell (130), respectively, and the second pipe member (192) which surrounds the first pipe member (191) is also divided with a partition wall into a third area and a fourth area to be in communication with the first suction line of the boiler (110) and the second suction line (135) of the fuel cell (130), respectively.

8. The boiler system using a fuel cell of claim 1, wherein the suction and exhaust integrated pipe (190) is a triple pipe having a suction and exhaust integrated opening, wherein the triple pipe has the first pipe member in communication with the first exhaust line of the boiler (110) and the second exhaust line (135) of the fuel cell (130) for the first exhaust line of the boiler (110) and the second exhaust line (135) of the fuel cell (130) use the first pipe member (191) in common, and the second pipe member (192) and the third pipe member (193) which surround the first pipe member (191) in succession to be in communication with the second suction line (135) of the fuel cell (130) and the first suction line (118) of the boiler (110), respectively.

9. The boiler system using a fuel cell of claim 8, further comprising a partition wall mounted to the first pipe member to divide a cross-sectional area of the first pipe member (191) into two areas for making the first exhaust line (117) of the boiler (110) and the second exhaust line (135) of the fuel cell (130) to be in communication therewith, respectively.

10. The boiler system using a fuel cell of claim 8, further comprising a damper means or an electronic valve means (190) provided at a crossing point of the first exhaust line (117) of the boiler (110) and the second exhaust line (135) of the fuel cell (130) which use the first pipe member (191) in common.

## Patentansprüche

1. Boilersystem, das eine Brennstoffzelle verwendet, umfassend:
einen in einer Wohnung oder einem Gebäude installierten Boiler (110);
eine Brennstoffzelle zum Erzeugen von Elektrizität und Reaktionswärme durch elektrochemische Reaktion zwischen einem Brennstoff und Sauerstoff;
einen Speichertank (150) zum Rückgewinnen und Speichern der durch die Brennstoffzelle (130) erzeugten Reaktionswärme mit einem Fluid;
eine unter einem Zimmerboden der Wohnung oder des Gebäudes vergrabene Zimmerheizleitung (170);
eine Warmwasserleitung, verbunden, um durch den Boiler (110) oder den Speichertank (150) einen Waschraum oder eine Küche der Wohnung oder des Gebäudes mit warmen Wasser zu versorgen, wenn Wasser von außerhalb dorthin geliefert wird; und
ein integriertes Ansaug- und Ablassrohr (190) mit mindestens zwei von mindestens einer ersten Ablassleitung (117), mindestens einer ersten Ansaugleitung (118) des Boilers (110), mindestens einer zweiten Ablassleitung (135) und mindestens einer zweiten damit verbundenen Ansaugleitung (135) der Brennstoffzelle (130), um gemeinsam verwendet zu werden, wobei das integrierte Ansaug- und Ablassrohr (190) aus einem ersten durch die erste Ansaugleitung (118) des Boilers (110) und die zweite Ansaugleitung (135) der Brennstoffzelle (130) gemeinsam verwendeten Rohrelement (191), und einem anderen ersten durch die erste Ablassleitung (117) des Boilers (110) und die zweite Ablassleitung (135) der Brennstoffzelle (130) gemeinsam verwendeten Rohrelement, konstruiert ist, **dadurch gekennzeichnet, dass** das Boilersystem (100) ferner an jedem der Kreuzungspunkte der ersten Ansaugleitung (118) des Boilers (110) und der zweiten Ansaugleitung (135) der Brennstoffzelle (130) und der ersten Ablassleitung des Boilers (110) und der zweiten Ablassleitung (135) der Brennstoffzelle (130) verwendete Drosselmittel oder elektronische Ventilmittel (160) umfasst.

2. Boilersystem, das eine Brennstoffzelle nach Anspruch 1 verwendet, wobei die zweite Ansaugleitung (135) eine Stapeleinheit (131), die elektrische Energie und Wärme durch elektrochemische Reaktion zwischen Wasserstoff und Sauerstoff erzeugt, und eine Reformiereinheit (133) zum Empfangen des Brennstoffs und Liefern von reformiertem Wasserstoff an die damit verbundene Stapeleinheit (131) aufweist.

3. Boilersystem, das eine Brennstoffzelle nach Anspruch 1 oder Anspruch 2 verwendet, wobei das integrierte Ansaug- und Ablassrohr (190) ein Mehrfachrohr ist, das mindestens zwei Rohrelemente beinhaltet, die auf einer konzentrischen Achse zentriert angeordnet sind.

4. Boilersystem, das eine Brennstoffzelle nach Anspruch 3 verwendet, wobei die mindestens zwei Rohrelemente eine Trennwand (191a) zum Aufteilen eines Querschnittsbereichs davon in mindestens zwei Bereiche beinhalten.

5. Boilersystem, das eine Brennstoffzelle nach Anspruch 1 verwendet, wobei
das integrierte Ansaug- und Ablassrohr (190) ein Doppelrohr mit einer integrierten Ansaug- und Ablassöffnung ist, wobei
das Doppelrohr ein erstes Rohrelement, hergestellt, um mit der ersten Ablassleitung des Boilers (110) und der zweiten Ablassleitung (135) der Brennstoffzelle (130) in Kommunikation zu stehen, damit die erste Ablassleitung des Boilers (110) und die zweite Ablassleitung (135) der Brennstoffzelle (130) das erste Rohrelement gemeinsam verwenden, und ein zweites Rohrelement, das das erste Rohrelement umgibt, das mit einer Trennwand hergestellt und dadurch getrennt ist, um mit der ersten Ansaugleitung des Boilers (110) und der zweiten Ansaugleitung der Brennstoffzelle (130) in Kommunikation zu stehen, damit die erste Ansaugleitung (118) des Boilers (110) und die zweite Ansaugleitung (135) der Brennstoffzelle (130) jeweils das zweite Rohrelement (192) verwenden, aufweist.

6. Boilersystem, das die Brennstoffzelle nach Anspruch 5 verwendet, ferner umfassend ein Drosselmittel oder ein elektronisches Ventilmittel, bereitgestellt an einem Kreuzungspunkt der ersten Ablassleitung des Boilers (110) und der zweiten Ablassleitung (135) der Brennstoffzelle (130), die das erste Rohrelement (191) gemeinsam verwenden.

7. Boilersystem, das eine Brennstoffzelle nach Anspruch 1 verwendet, wobei
das integrierte Ansaug- und Ablassrohr (190) ein Doppelrohr mit einer integrierten Ansaug- und Ablassöffnung mit Trennwänden (191a) ist, gebildet auf inneren und äußeren Rohrelementen und wobei
das Doppelrohr das erste Rohrelement (191) durch eine Trennwand in einen ersten Bereich und einen zweiten Bereich getrennt aufweist, um jeweils mit der ersten Ablassleitung (117) des Boilers (110) und der zweiten Ablassleitung (135) der Brennstoffzelle (130) in Kommunikation zu stehen, und das zweite Rohrelement (192), das das erste Rohrelement (191) umgibt, ebenfalls durch eine Trennwand in einen dritten Bereich und einen vierten Bereich getrennt ist, um jeweils mit der ersten Ansaugleitung des Boilers (110) und der zweiten Ansaugleitung (135) der Brennstoffzelle (130) in Kommunikation zu stehen.

8. Boilersystem, das eine Brennstoffzelle nach Anspruch 1 verwendet, wobei das integrierte Ansaug- und Ablassrohr (190) ein Dreifachrohr mit einer integrierten Ansaug- und Ablassöffnung ist, wobei das Dreifachrohr das erste Rohrelement mit der ersten Ablassleitung des Boilers (110) und der zweiten Ablassleitung (135) der Brennstoffzelle (130) in Kommunikation stehend aufweist, damit die erste Ablassleitung des Boilers (110) und die zweite Ablassleitung (135) der Brennstoffzelle (130) das erste Rohrelement (191) gemeinsam verwenden, und das zweite Rohrelement (192) und das dritte Rohrelement (193), die das erste Rohrelement (191) nacheinander umgeben, um jeweils mit der zweiten Ansaugleitung (135) der Brennstoffzelle (130) und der ersten Ansaugleitung (118) des Boilers (110) in Kommunikation zu stehen.

9. Boilersystem, das eine Brennstoffzelle nach Anspruch 8 verwendet, ferner umfassend eine an das erste Rohrelement montierte Trennwand, um einen Querschnittsbereich des ersten Rohrelements (191) in zwei Bereiche zum Herstellen von jeweils der ersten Ablassleitung (117) des Boilers (110) und der zweiten Ablassleitung (135) der Brennstoffzelle (130) zu trennen, um damit in Kommunikation zu stehen.

10. Boilersystem, das die Brennstoffzelle nach Anspruch 8 verwendet, ferner umfassend ein Drosselmittel oder ein elektronisches Ventilmittel (190), bereitgestellt an einem Kreuzungspunkt der ersten Ablassleitung (117) des Boilers (110) und der zweiten Ablassleitung (135) der Brennstoffzelle (130), die das erste Rohrelement (191) gemeinsam verwenden.

## Revendications

1. Système de chaudière utilisant une pile à combustible comprenant :
une chaudière (110) installée dans une maison ou un bâtiment ;
une pile à combustible pour générer de l'électricité et une chaleur de réaction par réaction électrochimique entre un combustible et de l'oxygène ;
un réservoir de stockage (150) pour récupérer et stocker la chaleur de réaction générée par la pile à combustible (130) avec un fluide ;
une conduite de chauffage de pièce (170) enterrée sous un plancher de pièce de la maison ou du bâtiment ;
une conduite d'eau chaude reliée pour fournir de l'eau chaude à une salle de bain ou à une cuisine de la maison ou du bâtiment à travers la chaudière (110) ou le réservoir de stockage (150) lorsque l'eau lui est fournie depuis l'extérieur ; et
un tuyau intégré d'aspiration et d'échappement (190) ayant au moins deux conduites d'au moins une première conduite d'échappement (117), d'au moins une première conduite d'aspiration (118) de la chaudière (110), d'au moins une deuxième conduite d'échappement (135), et d'au moins une deuxième conduite d'aspiration (135) de la pile à combustible (130) reliées à celui-ci pour être utilisées en commun, où le tuyau intégré d'aspiration et d'échappement (190) est constitué d'un premier élément de tuyau (191) utilisé par la première conduite d'aspiration (118) de la chaudière (110) et par la deuxième conduite d'aspiration (135) de la pile à combustible (130) en commun, et un autre premier élément de tuyau utilisé par la première conduite d'échappement (117) de la chaudière (110) et par la deuxième conduite d'échappement (135) de la pile à combustible (130) en commun, **caractérisé en ce que** le système de chaudière (100) comprend en outre un moyen d'amortissement ou un moyen de soupape électronique (160) utilisé au niveau de chacun des points de croisement de la première conduite d'aspiration (118) de la chaudière (110) et de la deuxième conduite d'aspiration (135) de la pile à combustible (130) et de la première conduite d'échappement de la chaudière (110) et de la deuxième conduite d'échappement (135) de la pile à combustible (130).

2. Système de chaudière utilisant une pile à combustible de la revendication 1, dans lequel la deuxième conduite d'aspiration (135) a une unité d'empilement (131) qui génère de l'énergie électrique et de la chaleur par réaction électrochimique entre l'hydrogène et l'oxygène et une unité de reformage (133) pour recevoir le combustible et pour fournir l'hydrogène reformé à l'unité d'empilement (131) reliée à celle-ci.

3. Système de chaudière utilisant une pile à combustible de la revendication 1 ou 2, dans lequel le tuyau intégré d'aspiration et d'échappement (190) est un tuyau multiple comportant au moins deux éléments de tuyau agencés de manière centrée sur un axe concentrique.

4. Système de chaudière utilisant une pile à combustible de la revendication 3, dans lequel les au moins deux éléments de tuyau comportent une paroi de séparation (191a) pour diviser une zone de section transversale de ceux-ci en au moins deux zones.

5. Système de chaudière utilisant une pile à combustible de la revendication 1, dans lequel
le tuyau intégré d'aspiration et d'échappement (190) est un tuyau double ayant une ouverture intégrée d'aspiration et d'échappement, où
le tuyau double a un premier élément de tuyau amené à être en communication avec la première conduite d'échappement de la chaudière (110) et la deuxième conduite d'échappement (135) de la pile à combustible (130) pour la première conduite d'échappement de la chaudière (110) et la deuxième conduite d'échappement (135) de la pile à combustible (130) pour utiliser le premier élément de tuyau en commun, et un deuxième élément de tuyau qui entoure le premier élément de tuyau réalisé et divisé par une paroi de séparation pour être en communication avec la première conduite d'aspiration de la chaudière (110) et la deuxième conduite d'aspiration de la pile à combustible (130) pour la première conduite d'aspiration (118) de la chaudière (110) et la deuxième conduite d'aspiration (135) de la pile à combustible (130) pour utiliser le deuxième élément de tuyau (192), respectivement.

6. Système de chaudière utilisant une pile à combustible de la revendication 5, comprenant en outre un moyen d'amortissement ou un moyen de soupape électronique prévu au niveau d'un point de croisement de la première conduite d'échappement de la chaudière (110) et de la deuxième conduite d'échappement (135) de la pile à combustible (130) qui utilisent le premier élément de tuyau (191) en commun.

7. Système de chaudière utilisant une pile à combustible de la revendication 1, dans lequel
le tuyau intégré d'aspiration et d'échappement (190) est un tuyau double ayant une ouverture intégrée d'aspiration et d'échappement avec des parois de séparation (191a) formées sur des éléments de tuyau interne et externe, et où
le tube double a le premier élément de tuyau (191) divisé par une paroi de séparation en une première zone et une deuxième zone devant être en communication avec la première conduite d'échappement (117) de la chaudière (110) et la deuxième conduite d'échappement (135) de la pile à combustible (130), respectivement, et le deuxième élément de tuyau (192) qui entoure le premier élément de tuyau (191) est également divisé par une paroi de séparation en une troisième zone et une quatrième zone devant être en communication avec la première conduite d'aspiration de la chaudière (110) et la deuxième conduite d'aspiration (135) de la pile à combustible (130), respectivement.

8. Système de chaudière utilisant une pile à combustible de la revendication 1, dans lequel le tuyau intégré d'aspiration et d'échappement (190) est un tuyau triple ayant une ouverture intégrée d'aspiration et d'échappement, où le tuyau triple a le premier élément de tuyau en communication avec la première conduite d'échappement de la chaudière (110) et la deuxième conduite d'échappement (135) de la pile à combustible (130) pour la première conduite d'échappement de la chaudière (110) et la deuxième conduite d'échappement (135) de la pile à combustible (130) utilisent le premier élément de tuyau (191) en commun, et le deuxième élément de tuyau (192) et le troisième élément de tuyau (193) qui entourent le premier élément de tuyau (191) successivement pour être en communication avec la deuxième conduite d'aspiration (135) de la pile à combustible (130) et la première conduite d'aspiration (118) de la chaudière (110), respectivement.

9. Système de chaudière utilisant une pile à combustible de la revendication 8, comprenant en outre une paroi de séparation montée sur le premier élément de tuyau pour diviser une zone de section transversale du premier élément de tuyau (191) en deux zones pour amener la première conduite d'échappement (117) de la chaudière (110) et la deuxième conduite d'échappement (135) de la pile à combustible (130) à être en communication avec celui-ci, respectivement.

10. Système de chaudière utilisant une pile à combustible de la revendication 8, comprenant en outre un moyen d'amortissement ou un moyen de soupape électronique (190) prévu au niveau d'un point de croisement de la première conduite d'échappement (117) de la chaudière (110) et de la deuxième conduite d'échappement (135) de la pile à combustible (130) qui utilisent le premier élément de tuyau (191) en commun.
